# EUROPEAN PATENT APPLICATION

(11) **EP 2 687 770 A1**
(43) Date of publication of application: **22.01.2014**
(21) Application number: 11861449.4
(22) Date of filing: 18.03.2011
(51) Int. Cl.: F16N 39/06, B01J 39/04, B01J 41/04, B01J 41/08, F01M 11/03

(54) **MACHINE LUBRICATING DEVICE AND OIL FILTER**

(71) Applicant: TOYOTA JIDOSHA KABUSHIKI KAISHA, Toyota-shi, Aichi-ken, 471-8571 (JP)
(72) Inventor: FUKUTOMI, Ippei, Toyota-shi, Aichi-ken 471-8571 (JP); INAMI, Norio, Toyota-shi, Aichi-ken 471-8571 (JP); MURAKAMI, Motoichi, Toyota-shi, Aichi-ken 471-8571 (JP); HARADA, Kenichi, Toyota-shi, Aichi-ken 471-8571 (JP)
(74) Representative: Albutt, Anthony John
(86) International application number: PCT/JP2011/001636
(87) International publication number: WO 2012/127519

(57) **Abstract**

The present invention provides a lubrication apparatus (26) configured to supply oil to one or more supply portions in an internal combustion engine (10). This lubrication apparatus (26) includes a first member (48) including a hydrotalcites compound that is provided in an oil passage (32), and a second member (50) that is provided in the oil passage (32) and includes a reaction substance having a function of trapping a metallic component separated from the the hydrotalcites compound.

## Description

### Technical Field

The present invention relates to a lubrication apparatus to supply oil to one or more supply portions in a machine such as an internal combustion engine, and an oil filter that can be applied to the lubrication apparatus.

### Background Art

An internal combustion engine is provided with a lubrication apparatus configured to supply oil to supply portions such as a sliding portion and the like therein. Various kinds of oil filters can be used in such a lubrication apparatus.

Patent Literature 1 discloses a filtering element for a bypass oil filter in an internal combustion engine. According to the description of Patent Literature 1, this filtering element includes a hydrotalcites compound that is expressed according to the following (1) formula.

MgₓAl₂(OH)_{6+2x-2y}(CO₃)_{y}·mH₂O (1),

where x and y are integral numbers that meet a condition of 3<x<20 and 0<y<2, and m indicates an integral number.

### Citation List

### Patent Literature

PTL 1: Japanese Patent Laid-Open No. H03-296408(1991)

### Summary of Invention

Incidentally in a case where the oil filter including the aforementioned hydrotalcites compound is used in the lubrication apparatus in the internal combustion engine, there is a possibility that, for example, Mg or Al is eluted into the oil from the hydrotalcites compound. Mg and Al can accelerate degradation of the oil, and therefore, any measure should preferably be taken.

Therefore the present invention is made in view of the foregoing problem, and an object of the present invention is to, in a case of using hydrotalcites compounds in a lubrication apparatus in a machine such as an internal combustion engine, suppress degradation of oil due to the hydrotalcites compound.

A first aspect of the present invention provides a lubrication apparatus in a machine comprising a hydrotalcites compound that is provided in an oil passage, and a reaction substance that is provided in the oil passage and has a function of trapping a metallic component separated from the hydrotalcites compound.

The reaction substance preferably has a function of trapping a positive ion, which is separated from the hydrotalicites compound, as the metallic component.

Preferably the lubrication apparatus in the machine according to the present invention further comprises an output means for outputting a signal corresponding to an amount of the metallic component in the oil, and a degradation determining means for determining degradation of the oil based upon the output of the output means.

It should be noted that the lubrication apparatus in the machine according to the present invention can include an oil filter that is provided in the oil passage, wherein the oil filter may include the hydrotalcites compound and the reaction substance. Alternatively the lubrication apparatus in the machine according to the present invention can include two oil filters that are provided in the oil passage, wherein one of the two oil filters may include at least the hydrotalcites compound, and the other of the two oil filters may include at least the reaction substance.

It should be noted that the machine preferably is an internal combustion engine.

A second aspect of the present invention provides an oil filter comprising a hydrotalcites compound that is provided in an oil passage, and a reaction substance that is provided in the oil passage and has a function of trapping a metallic component separated from the hydrotalcites compound. In this case, the reaction substance preferably has a function of trapping a positive ion, which is separated from the hydrotalcites compound, as the metallic component.

The above-mentioned, and other features and advantages of the present invention will become more apparent from the description of the following, exemplified embodiments made with reference to the accompanying drawings.

### Brief Description of Drawings

[Fig. 1] Fig. 1 is a schematic diagramof an internal combustion engine to which a first embodiment in the present invention is applied;
[Fig. 2] Fig. 2 is a schematic diagram of a part of a lubrication apparatus in the internal combustion engine in Fig. 1;
[Fig. 3] Fig. 3 is a graph conceptually showing the experimental result in regard to the first embodiment;
[Fig. 4] Fig. 4 is a schematic diagramof an internal combustion engine to which a second embodiment in the present invention is applied;
[Fig. 5] Fig. 5 is a flow chart in regard to the second embodiment; and
[Fig. 6] Fig. 6 is a graph conceptually showing the experimental result in regard to the second embodiment. Description of Embodiments

Hereinafter, an explanation will be made of embodiments according to the present invention with reference to the drawings. However, thereinafter the embodiments in each of which the present invention is applied to an internal combustion engine will be explained, but the present invention may be applied to other machines other than the internal combustion engine. First, a first embodiment will be explained.

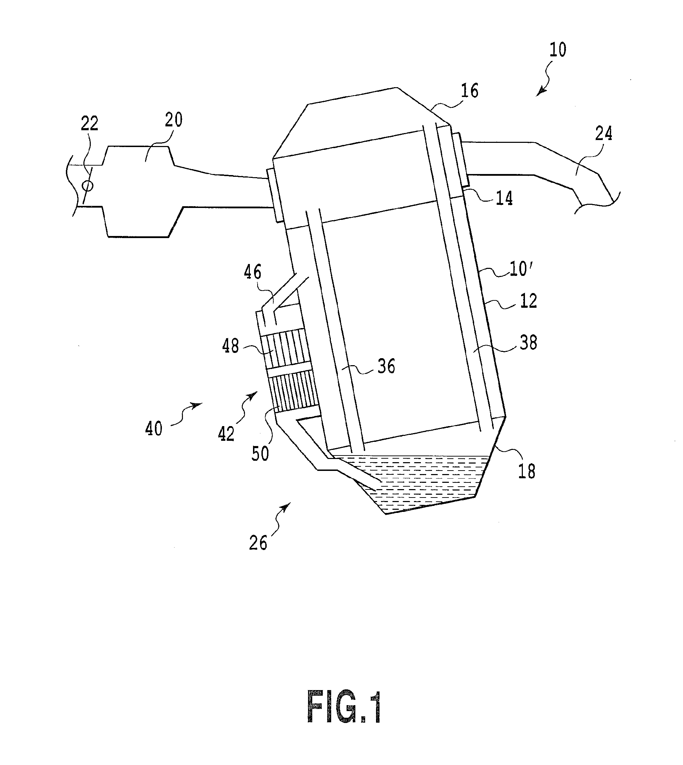

Fig. 1 shows a schematic diagram of an internal combustion engine 10 (hereinafter, called an engine) to which the first embodiment is applied. Herein a vehicle is equipped with the engine 10. The engine 10 is an engine of an in-line four-cylinder type, but an engine to which the present invention is applied may be an engine of not only any cylinder number and any cylinder arrangement type, but also a spark ignition type engine or a compression ignition type engine.

The engine 10 includes a cylinder block 12 provided integrally with a crank case, a cylinder head 14, a head cover 16 for covering the cylinder head 14 from above, and an oil pan 18. A mixture of air taken in via a throttle valve 22 in an intake passage 20 and fuel injected from a fuel injection valve burns in a combustion chamber, and an exhaust gas thereof is discharged via an exhaust passage 24.

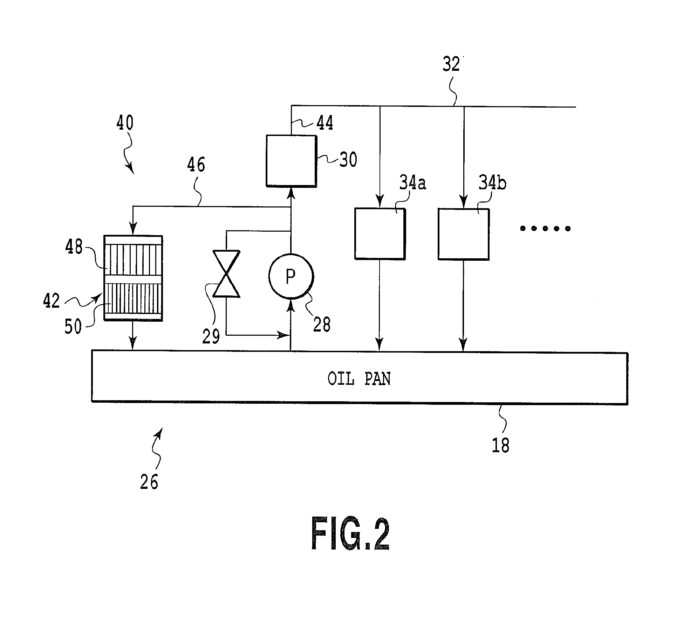

A lubrication apparatus 26 in the engine 10 is configured to supply oil to one or supply portions in the engine 10. The one or more supply portions include herein a plurality of supply portions including a plurality of sliding portions in the engine 10. A part of the lubrication apparatus 26 is schematically illustrated in Fig. 1, and a part of the lubrication apparatus 26 is further schematically illustrated in Fig. 2. Hereinafter, the engine 10 and the lubrication apparatus 26 will be explained with reference to Fig. 1 and Fig. 2.

The lubrication apparatus 26 has a strainer (not shown) and an oil pump 28, and oil that is reserved in the oil pan 18 as an oil reservoir section is pumped up (suctioned) by the oil pump 28 via the strainer. In this regard, however, the pump 28 is configured to be mechanically driven by receiving power from a cam shaft or a crank shaft following an operation of the engine 10, and is provided with a relief valve 29 to release the oil to a side of the oil pan 18 at a high hydraulic pressure.

The oil pumped up by the oil pump 28 as described above is supplied via an oil filter 30 to a plurality of portions 34a, 34b ... in the engine 10 through an oil passage 32 (including a plurality of oil paths corresponding to the respective supply portions) that is formed in the engine 10. The portions 34a, 34b ... include, for example, cam shaft journals, crank journals, connecting rods, pistons and the like. The lubricating oil, that is, the oil supplied to the plurality of portions in this way finally returns back to the oil pan 18 by its self-weight. The oil is thus circulated in the lubrication apparatus 26. It should be noted that a space in which the oil can thus flow in the engine 10 is herein called "oil passage".

An oil return passage 36 is formed in the cylinder block 12 and the cylinder head 14 in such a manner as to establish communication between an inside of the head cover 16 or an inside of the cylinder head 14 and an inside of the crank case, that is, an inside of the oil pan 18. The oil return passage 36 is a passage for returning (dropping), for example, the oil having finished the lubrication of a valve train from the cylinder head 14 toward the inside of the oil pan 18. In addition, an air passage 38 is formed to establish connection between the inside of the crank case, that is, the inside of the oil pan 18 and the inside of the head cover 16 or the inside of the cylinder head 14. The air passage 38 also has a function of upward moving the blow-by gas in the crank case toward the inside of the head cover 16. In this regard, however, the oil return passage 36 and the air passage 38 can respectively function as oil passages, and can also function as air passages. It should be noted that the number of the oil return passage 36 and the number of the air passage 38 respectively may be set to any number.

Here, the blow-by gas means a gas that leaks out into the inside of the crank case from a gap between a piston ring of the piston and a cylinder bore of the cylinder block 12. This blow-by gas contains a great deal of hydrocarbons and water components. Therefore too many blow-by gases cause earlier degradation of the engine oil or rust of an internal part of the engine. In addition, since the blow-by gas contains the hydrocarbon, it is not preferable environmentally to release the blow-by gas into an atmosphere as it is. Therefore the engine 10 has a known blow-by gas circulation device (not shown). The blow-by gas is introduced into the head cover 16, and thereafter is forcibly returned back to an intake system by using an intake negative pressure to be supplied into the combustion chamber.

Incidentally, for example, NOx, SOx, and water components are contained in the blow-by gas. In addition, for example, since heat from the engine is hard to be transmitted to the head cover 16 and the head cover 16 is exposed to outside air at an outer surface thereof to be cooled by cooling wind or the like, condensed water due to dew condensation or the like tends to be easily generated on the inner surface of the head cover 16. Therefore acid substances, for example, nitric acid and sulfuric acid tend to be easily generated particularly in the head cover 16 due to the reaction thereof. These acid substances can be mixed with the lubrication oil, that is, the engine oil to accelerate generation, adhesion, and accumulation of the sludge precursor and the sludge in the engine. The sludge can be generated due to degradation of oil, and can further cause the degradation of the oil. Therefore suppression of generation or the like of the sludge precursor and the sludge brings in suppression of degradation of the oil.

Therefore an oil degradation suppressing apparatus 40 applied to the lubrication apparatus 26 in the engine 10 has an oil filter 42 for removing such acid substances, that is, acid components from the engine oil. The oil filter 42 as a filtering member is provided in a bypass passage 46 that is branched from a main oil passage 44 of the oil passage 32 to be communicated with the inside of the oil pan 18. The bypass passage 46 is included in the oil passage 32, and may be called a sub oil passage to the main oil passage 44 for supplying oil to the above-mentioned supply portions 34a, 34b... in the engine 10.

In this regard, however, in Fig. 1, for illustrating a primary part of the oil degradation suppressing apparatus 40 including the oil filter 42 in an exaggerating manner, the oil filter 42 and a part of the bypass passage 46 are drawn outside of an engine body 10'. However, the installation positions of the oil filter 42 and the like are not limited to the positions illustrated in Fig. 1, and can be changed to various locations. For example, the oil filter 42 and the like may be positioned to a portion making contact with an outside of each component in the engine body 10' , to a portion away from the outside thereof or to an inside of each component in the engine body 10'. In this regard, however, in the present embodiment, the oil filter 42 is provided to be replaceable. In this case, the oil filter 42 is preferably positioned in a position of being easy for replacement. It should be noted that the oil filter 42 is replaceable at an appropriate time.

A first member 48 and a second member 50 are serially arranged in the oil filter 42 in order from the upstream side. Herein, the oil degradation suppressing apparatus 40 is configured such that the oil can flow in the oil filter 42 by not only the pressure by the oil pump 28 but also by using its self-weight, wherein the first member 48 is positioned upwards in a vertical direction to the second member 50. Therefore the oil that flows into the oil filter 42 goes to the first member 48, the oil that passes through the first member 48 goes to the second member 50, and thereafter, the oil that passes through the second member 50 can flow into the oil pan 18 by its self-weight.

The first member 48 in the oil filter 42 is configured to adsorb predetermined acid components in the oil. Specifically the first member 48 includes a support member, and a great number of (a plurality of) hydrotalcite particles supported or accommodated therein. Herein in the first member 48, hydrotalcite particles are supported in such a manner as to be sandwiched between filteringmembers as a part of the support member, and are further accommodated in a case member as a part of the support member. It should be noted that the support member of the case member and the like in the first member 48 is configured such that the oil can appropriately pass through them.

It should be noted that the support member of the first member 48 may be a net-like bag body, a three-dimensional net-like structure, a porous structure, a cylindrical structure or the like, and a plurality of hydrotalcite particles can be trapped or held in at least one of an inside thereof and clearances thereof. In addition, one or more hydrotalcites that are supported by such a support member may be a single or a plurality of block bodies integrally solidified at least in the process before use. In addition, one or more hydrotalcites that are supported by such a support member may be formed in a shape other than the particle.

The hydrotalcite as a first reaction substance provided in the first member 46 or included therein has a layered structure, and has the characteristic of taking in negative ions, that is, anions between layers of a skeleton portion configured to include metallic components as primary components. Such a hydrotalcite may have a function of taking in, that is, absorbing a new negative ion, and instead, releasing the negative ion that hasbeenheldbetweenlayerssofar. Therefore, the hydrotalcite is an ion exchange body (ion exchange material), and functions as the ion exchange body. The hydrotalcite has a function of adsorbing a predetermined ion, that is, an ion component in the oil, particularly an acid component (e.g. a nitric acid ion) in the oil. Specifically the hydrotalcite is used for removing a nitric acid ion (NO₃⁻) that can be generated by NOx in the blow-by gas and water, and a sulfate ion (SO₄²⁻) that can be generated by SOx in the blow-by gas and water from the oil. It should be noted that the acid component desired to be removed from the oil by the hydrotalcite is not only the nitric acid ion (NO₃⁻) and the sulfate ion (SO₄²⁻) but also, for example, an acetate ion (CH₃COO⁻) that can be generated based upon the blow-by gas and similarly a formic acid ion (HCOO⁻) that can be generated based upon the blow-by gas. The hydrotalcite in the first member 48 can have a function of adsorbing, that is, trapping at least one component selected from a group containing these ions or a group consisting of these ions.

In the first member 48, various kinds of the hydrotalcites each having the aforementioned layered structure, that is, hydrotalcites compounds can be contained. For example, as the hydrotalcite, "Mg₆Al₂(OH)(CO₃)₁₆" (hereinafter, called "HT") made by Wako Pure Chemical Industries, Ltd. may be used. This hydrotalcite, that is, HT is a layered compound including layers of the skeleton portion configured to include Al and Mg as primary components, and negative ions interposed in a sandwich shape between the layers.

On the other hand, the second member 50 in the oil filter 42 is configured to trap a predetermined component in the oil. Specifically the second member 50 includes a support member, and a great number of (a plurality of) positive ion exchange resin particles supported or accommodated therein. In the second member 50 herein, a great number of (a plurality of) positive ion exchange resin particles are accommodated in the case member as the support member. It should be noted that the case member of the second member 50 is configured such that the oil can appropriately pass through it.

It should be noted that the support member of the second member 50 may be a net-like bag body, a three-dimensional net-like structure, a porous structure, a cylindrical structure or the like, and a plurality of positive ion exchange resin particles can be trapped or held in at least one of an inside thereof and clearances thereof. In addition, one or more positive ion exchange resins that are supported by such a support member may be a single or a plurality of block bodies, or may have various kinds of shapes other than the particle.

The positive ion exchange resin as a second reaction substance provided in the second member 50 or included therein is an ion exchange body (ion exchange material). The positive ion exchange resin used herein has a function of trapping, that is, absorbing a predetermined positive ion (ion component). Specifically the positive ion exchange resin has a function of trapping a positive ion such as an Al ion (Al³⁺) and a Mg ion (Mg²⁺). It should be noted that an example of the ion exchange resin that may be used in the second member 50 includes an ion exchange resin of Diaion (registered trademark) series (for example, WK10 or WK11) made by Mitsubishi Chemical Co., Ltd.

Next, an explanation will be made of the operational effect of the oil degradation suppressing apparatus 40 in the lubrication apparatus 26 of the engine 10 including the above-mentioned configuration.

When the oil supplied to the oil filter 42 by the operation of the pump 28 driven following an operation of the engine 10 passes through the first member 48, predetermined components of the nitric acid ion and the like can be trapped by the hydrotalcite therein, which can be removed from the oil. Therefore, it is possible to suppress generation or the like of the sludge precursor and the sludge.

Besides, the hydrotalcite has the layer of the skeleton portion configured to include the metallic components as the primary component as described above, and has, for example, the characteristic that the metallic component such as Mg or Al in the layer of the skeleton portion tends to be easily eluted into oil. Particularly when the hydrotalcite to be used is a particle substance having a diameter of approximately 5 to 30µm, elution of the metallic component such as Al or Mg into oil tends to be easily generated. The metallic components such as Al and Mg that are separated from the hydrotalcite can have an influence on an oil addictive or oil itself to achieve an assisting catalyst function for accelerating the oil degradation. Therefore it is desired to remove the metallic components such as Al and Mg that are the predetermined components due to the hydrotalcite, from the oil or the oil passage 32.

This metallic component such as Al or Mg can generally exist in the oil as a positive ion. In contrast, the ion exchange resin in the second member 50 provided as described above, has the function of trapping or absorbing a positive ion. Therefore Al and Mg that are separated from and due to the hydrotalcite of the first member 48 can be trapped by the positive ion exchange resin in the second member 50. Accordingly the oil degradation based upon the hydrotalcite use can be suppressed, and as a result, it is possible to enhance the effect of suppressing the oil deterioration due to the hydrotalcite.

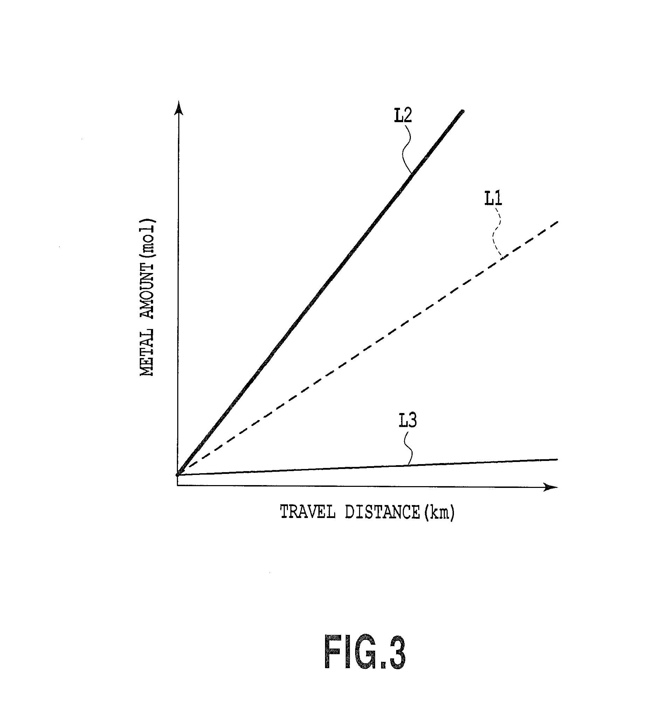

The effect when the oil filter 42 as described above is provided in the oil passage 32 in the lubrication apparatus 26 of the engine 10 was examined by experiments. The result will be explained with reference to Fig. 3. The lateral axis in Fig. 3 indicates a travel distance (km) of a vehicle equipped with the engine 10, and the vertical axis indicates a metal amount (mol) in the oil of the lubrication apparatus 26. It should be noted that in the experiment, the above-mentioned HT was used as the hydrotalcite, and the ion exchange resin of Diaion (registered trademark) series made by Mitsubishi Chemical Co., Ltd. was used as the positive ion exchange resin.

A line L1 in Fig. 3 shows a relation between a travel distance and a metal amount in a case where the oil filter 42 is not provided, that is, in a case where the hydrotalcite and the positive ion exchange resin are not provided. A line L2 in Fig. 3 shows a relation between a travel distance and a metal amount in a case where the oil filter 42 with the second member 50 removed is provided, that is, in a case where only the hydrotalcite is provided in the oil passage. Further, a line L3 in Fig. 3 shows a relation between a travel distance and a metal amount in a case where the oil filter 42 is provided, that is, in a case where both the hydrotalcite and the positive ion exchange resin are provided in the oil passage.

As apparent from the line L2, the hydrotalcite was arranged in the oil passage, thereby increasing the metal amount in the oil. This is estimated because the metallic component such as Al or Mg was eluted into the oil from the hydrotalcite.

On the other hand, when the positive ion exchange resin was arranged in the oil passage in addition to the hydrotalcite, an increase in a metal amount in the oil was largely suppressed, and particularly, was suppressed to be lower than an increase in a metal amount in a case where both the hydrotalcite and the positive ion exchange resin were not provided. This is estimated because the positive ion exchange resin trapped Al and Mg that were eluted from the hydrotalcite, and further, trapped also the metallic components generated from abrasion and the like in a sliding portion and the like of the engine 10.

In this way, when the hydrotalcite is provided in the oil passage, a reaction substance, which has a function of trapping the predetermined metallic component as separated from the hydrotalcite, such as the positive ion exchange resin is provided in the oil passage together therewith, and thereby it is possible to sufficiently prevent or suppress the oil degradation due to the hydrotalcite.

It should be noted that in the first embodiment, the hydrotalcite and the reaction substance that is the positive ion exchange resin respectively are supported by members different from each other for separation. In this regard, however, the present invention allows them to be combined or mixed for use.

In addition, in the oil filter 42 according to the above-mentioned embodiment, the first member 48 is arranged upward in the vertical direction of the second member 50. In this regard, however, the oil filter 42 is formed as a cylindrical structure including an inner cylinder and an outer cylinder, wherein the hydrotalcite can be accommodated in one of the inner cylinder and the outer cylinder, and the reaction substance such as the positive ion exchange resin can be accommodated in the other cylinder. It should be noted that one member where the hydrotalcite is accommodated is preferably positioned upstream of the other member where the reaction substance such as the positive ion exchange resin is accommodated, but may be positioned downstream of the other member.

In addition, in the above-mentioned embodiment, the hydrotaocite and the reaction substance which is the ion exchange resin are incorporated in the single oil filter, but respectively may be accommodated in different filtering members. That is, two oil filters that are provided in the oil passage are used, wherein one of the two oil filters may include at least the hydrotalcites compound, and the other of the two oil filters may include the reaction substance, that is, the second reaction substance. In addition, the hydrotalcite and the second reaction substance may be arranged to be adjacent to each other, but may be arranged to be in a position far away from each other, for example, in different oil return passages.

In the above-mentioned embodiment, the oil that is circulated and supplied by the oil pump 28 is branched to an oil filter 30 that is a full flow filter and the oil filter 42 that is a bypass filter. In this regard, however, the oil filter 42 including the hydrotalcite and the ion exchange resin may be provided in the oil passage 32 as a full flow filter. For example, the oil filter 42 may be provided to be adjacent to the oil filter 30, or may be incorporated integrally with the oil filter 30. In a case where the hydrotalcite and the ion exchange resin are respectively accommodated in the different filtering members to form the two oil filters, both or one of the two oil filters may be used as the full flow filter or the bypass filter.

It should be noted that in the above-mentioned embodiment, the positive ion exchange resin as the second reaction substance is included in the second member 50, but the second reaction substance to be used is not limited to the ion exchange resin, and various kinds of ion exchange bodies may be used as the second reaction substance. For example, various kinds of inorganic ion exchange bodies may be used as the second reaction substance. Examples of the inorganic ion exchange body may include zeolite, crystalline antimony acid, aqueous pentoxide antimony, titanium phosphate, zirconium phosphate, titanium hydroxide, zirconium hydroxide, and the like.

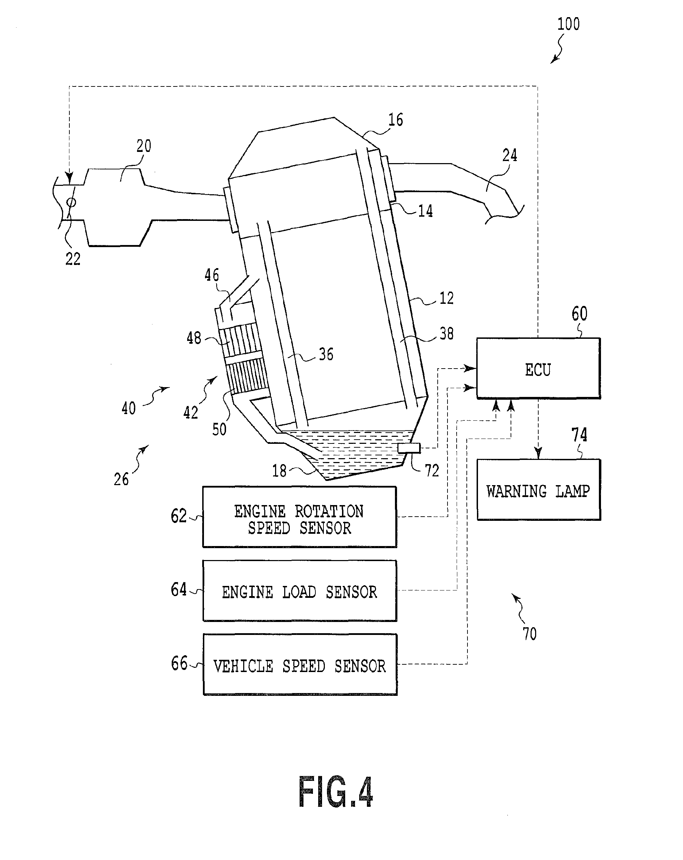

Next, a second embodiment according to the present invention will be explained. An engine 100 to which the second embodiment is applied is provided with the same configuration as that of the above-mentioned engine 10, and is further provided with an oil degradation detecting apparatus. Hereinafter, an explanation will be made primarily of the oil degradation detecting apparatus. It should be noted that hereinafter, the engine to which the second embodiment is appliedwill be explained with reference to Fig. 4 and Fig. 2, and components identical to those already explained are referred to as identical codes, and the overlapping explanation thereof can be omitted. It should be noted that the above-mentioned modification and the like to the first embodiment can likewise be applied to the second embodiment.

The engine 100 to which the second embodiment is applied is provided with an electronically controlled unit (ECU) 60 that substantially has functions of various kinds of control devices (control means) and various kinds of detecting devices (detecting means) in the engine 100. The ECU 60 is configured of a microcomputer including a CPU, a memory device including a ROM and a RAM, an A/D converter, an input interface, an output interface and the like. The input interface is connected electrically to various sensors including an engine rotation speed sensor 62 for detecting an engine rotation speed, an engine load sensor 64 for detecting an engine load, a vehicle speed sensor 66 and the like. For example, a crank angle sensor may be used as the engine rotation speed sensor 62. In addition, an air flow meter, an accelerator opening degree sensor or the like may be used as the engine load sensor 64. The ECU 60 electrically outputs operation signals (drive signals) to a fuel injection valve, an actuator for the throttle valve 22 and the like from the output interface based upon output (detection signals) from these various sensors such that a smooth drive or operation of the engine 10 can be performed according to preset programs.

It should be note that this electronically controlled system, for example, the ECU 60 and various kinds of sensors including the engine rotation speed sensor 62, the engine load sensor 64, the vehicle speed sensor 66 and the like are omitted in the explanation in the first embodiment, which are similarly provided also in the engine 10.

The engine 100 in the second embodiment is further provided with the oil degradation detecting apparatus 70. By applying the oil degradation suppressing apparatus 40 including the oil filter 42 to the lubrication apparatus 26 as described above, the degradation of the oil in the lubrication apparatus 26 can be suppressed. In this regard, however, since the oil filter 42 is gradually degraded in performance for its use, the oil filter 42 is desirably replaced at appropriate timing. The appropriate timing can be suitably determined by using the oil degradation detecting apparatus 70.

The oil degradation detecting apparatus 70 includes a permittivity sensor 72 as an output means for outputting a signal in accordance with an amount of metallic components in the oil, and a degradation determining means for determining degradation of the oil based upon the output of the permittivity sensor 72. The permittivity sensor 72 is provided in the oil pan 18 in the oil passage 32 herein, but may be provided in the other location in the oil passage 32. It should be noted that various kinds of sensors may be used as the permittivity sensor 72, and, for example, commercial products made by BOSCH Co., commercial products made by Delphi Co. , commercial products made by Kittiwake Co., and the like may be adopted. It should be noted that a sensor other than the permittivity sensor may be used as the output means for outputting a signal in accordance with an amount of metallic components in the oil.

An amount of metallic components of Al, Mg, Fe and the like in the oil has a proportional relation to the permittivity of oil. Therefore the output from the permittivity sensor 72 has a correlation with the amount of the metallic components in the oil, for example, a metal concentration. Therefore the degradation of the oil can be determined based upon the output from the permittivity sensor 72.

An output signal from the permittivity sensor 72 is processed as described later by the ECU 60 to which the permittivity sensor 72 is electrically connected. The ECU 60 has a function of the degradation determining means for determining degradation of the oil based upon the output signal from the permittivity sensor 72. In addition, when the ECU 60 determines that the oil is degraded, the ECU 60 can light up a warning lamp 74 in such a manner as to let a driver know about the degradation of the oil to prompt replacement of the oil filter 42. The warning lamp 74 may be provided on a front panel of a driver's seat or the like.

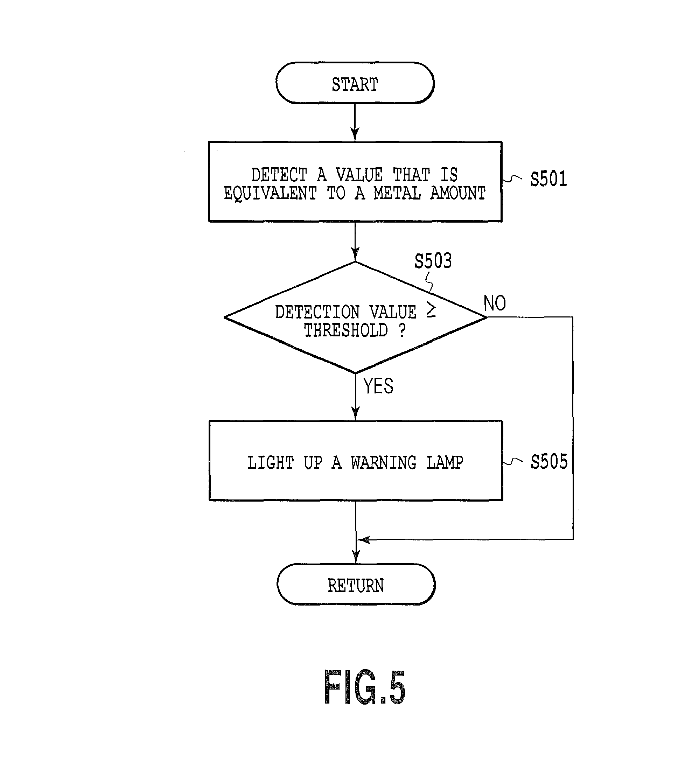

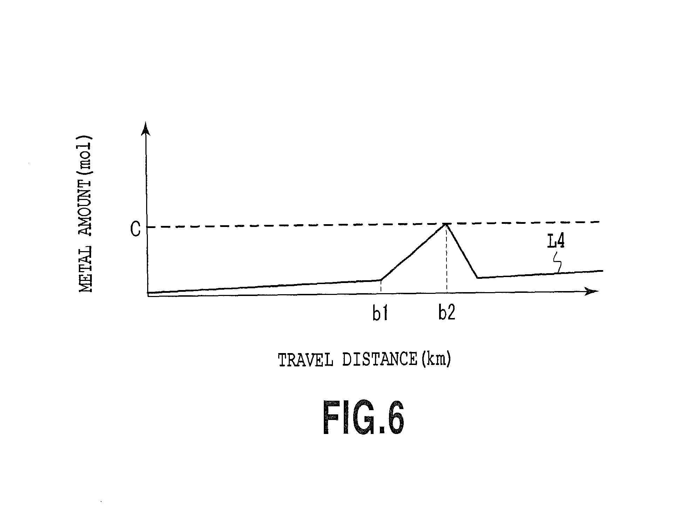

Hereinafter, the degradation determination of the oil will be explained with reference to Fig. 5 and Fig. 6. Fig. 5 is a flow chart indicating a flow of the degradation determination of the oil. Fig. 6 is a graph conceptually indicating the experiment result conducted for examining a relation between a travel distance (km) of a vehicle on which the engine 100 provided with the oil filter 42 is mounted and an amount of metallic components in the oil in the lubrication apparatus 26 of the engine 100, that is, a metal amount (mol).

At step S501 a value that is equivalent to the metal amount is detected. Specifically the permittivity is herein detected based upon an output signal from the permittivity sensor 72. It should be noted that the amount of the metallic components, that is, the metal amount may further be calculated based upon the permittivity. The value that is equivalent to the metal amount may be the permittivity or the metal amount in this way, or may be the other value. For example, a value of a voltage value, a current value or the like may be used as it is as the value that is equivalent to the metal amount. It should be noted that data, a calculation formula or the like for detecting the value that is equivalent to the metal amount is in advance stored in the memory device.

At step S503 it is determined whether or not the value detected at step S501, that is, the detection value is equal to or more than a threshold, that is, a predetermined value a. The threshold is in advance defined and stored in the memory device. In a case where the detection value is not equal to or more than the threshold a, at step S503 the negative determination is made.

Here, by referring to Fig. 6, Fig. 6 indicates a change in a metal amount in the oil. When the oil filter 42 sufficiently achieves its function, as already explained by referring to Fig. 3, since the metal in the oil is trapped by the positive ion exchange resin in the second member 50, an increase in a metal amount can very gradually be generated.

However, when the travel distance of a vehicle reaches b1 and the oil filter 42 can not achieve its function sufficiently, that is, when the lifetime of the oil filter 42 comes to an end, an increase speed of the metal amount in the oil increases. In addition, when the travel distance of a vehicle reaches b2 and the permittivity detected at step S501 reaches the threshold a that is determined considering this degradation lifetime of the oil filter 42, that is, when the metal amount in the oil reaches a metal amount c (see Fig. 6) that is equivalent to the threshold a that is determined considering this degradation lifetime of the oil filter 42, at step S503 the positive determination is made. As a result, at step S505 the warning lamp 74 lights up. Therefore the driver or the like can recognize the degradation of the oil filter 42 at an appropriate time to replace the oil filter by a new oil filter.

When the oil filter 42 is replaced by the new oil filter, as understood based upon a range where the travel distance in Fig. 6 exceeds b2, as a result that the function of the oil filter 42 is achieved, the metal amount in the oil is rapidly reduced to some degree, and after that, is very gradually increased.

The present invention is not limited to the aforementioned embodiments only, and the present invention can include all modifications and application examples, and its equivalents encompassed in a concept of the present invention defined in claims. Therefore the present invention should not be interpreted in a limiting manner, and can be applied to any other technology within the scope of the concept in the present invention.

## Claims

1. A lubrication apparatus in a machine comprising:
a hydrotalcites compound that is provided in an oil passage; and
a reaction substance that is provided in the oil passage and has a function of trapping a metallic component separated from the hydrotalcites compound.

2. A lubrication apparatus in a machine according to claim 1, wherein
the reaction substance has a function of trapping a positive ion, which is separated from the hydrotalicites compound, as the metallic component.

3. A lubrication apparatus in a machine according to claim 1 or 2, further comprising:
an output means for outputting a signal corresponding to an amount of the metallic component in the oil; and
a degradation determining means for determining degradation of the oil based upon the output of the output means.

4. A lubrication apparatus in a machine according to any one of claims 1 to 3, comprising:
an oil filter that is provided in the oil passage, wherein
the oil filter includes the hydrotalcites compound and the reaction substance.

5. A lubrication apparatus in a machine according to any one of claims 1 to 3, comprising:
two oil filters that are provided in the oil passage, wherein
one of the two oil filters includes at least the hydrotalcites compound, and
the other of the two oil filters includes at least the reaction substance.

6. A lubrication apparatus in a machine according to any one of claims 1 to 5, wherein
the machine is an internal combustion engine.

7. An oil filter comprising:
a hydrotalcites compound that is provided in an oil passage; and
a reaction substance that is provided in the oil passage and has a function of trapping a metallic component separated from the hydrotalcites compound.

8. An oil filter according to claim 7, wherein
the reaction substance has a function of trapping a positive ion, which is separated from the hydrotalcites compound, as the metallic component.
